# EUROPEAN PATENT APPLICATION

(11) **EP 1 566 762 A1**
(43) Date of publication of application: **24.08.2005**
(21) Application number: 03728123.5
(22) Date of filing: 20.05.2003
(51) Int. Cl.: G06K 7/00, G06K 17/00, G06F 3/00, G06F 13/00, G06F 17/30

(54) **TERMINAL DEVICE, CONTENT ACQUISITION METHOD, CONTENT PROVIDING METHOD, AND INFORMATION INPUT MEDIUM**

(30) Priority: 24.05.2002 JP 2002150587
(71) Applicant: SONY CORPORATION, Tokyo 141-0001 (JP)
(72) Inventor: USUDA, Hiroshi, c/o SONY CORPORATION, Tokyo 141-0001 (JP)
(74) Representative: Horner, David Richard
(86) International application number: PCT/JP2003/006279
(87) International publication number: WO 2003/100706

(57) **Abstract**

Using a camera 3 included in a terminal 1, an image of an information-including region in an information input medium 43 is captured. Captured image information is processed to detect the direction of rotation of an image pattern and to recognize a code for specifying an image that can be provided as content. On the basis of the recognized code, the image serving as the corresponding content is obtained from, for example, a site on the Web or a storage medium. Accordingly, a terminal capable of obtaining content, such as a background image to be pasted on a display screen, from the Web or the like using a simple process is provided.

## Description

### Technical Field

The present invention relates to a terminal with a function of displaying content obtained from the Web or the like, a content obtaining method for such a terminal, a content providing method for such a terminal, and an information input medium for inputting information to such a terminal.

### Background Art

In general, the amount of information that can be displayed on a display screen of a mobile terminal, such as a hand-held terminal or a cellular phone, is limited. To display an image larger than a display screen on the display screen, a function that is generally referred to as scrolling display is used. Although this scrolling display is generally employed in personal computers and the like, it is unrealistic to provide a mobile terminal with operation means equivalent to that of personal computers. In most cases, such a mobile terminal lets the user use not only a scrolling display, but also all functions only by operating buttons.

A method of improving the user-friendliness of a scrolling display of a mobile terminal is disclosed in, for example, Japanese Unexamined Patent Application Publication No. 2002-7027. This patent document discloses a technique in which longitudinal and lateral movement of the terminal is detected by, for example, an acceleration sensor; and, on the basis of the detection result, a displayed image is scrolled simultaneously in the direction in which the terminal is moving. This technology liberates the user from burdensome button operations involved in the above-mentioned scrolling display and provides a scrolling display that is intimately associated with human instincts.

When such a mobile terminal obtains various types of content, such as an image, music, and a document, from the Web or the like, the user must look the Web for a site or a page within a site that provides desired content by continuously scrolling a small display screen. Although the scrolling display itself becomes user-friendlier by the above-mentioned technique, the user must take a long time to perform complicated operations to obtain the desired content.

In accordance with the above-described circumstances, it is an object of the present invention to provide a terminal that can obtain desired content by a simple process, a content obtaining method, a content providing method, and an information input medium.

### Disclosure of Invention

In order to achieve the above-described objects, a terminal of the present invention includes a display unit that can display an image; image capturing means for capturing an image of an information-including region in an information input medium including information for specifying an image that can be provided as content, the information being encoded by the direction of rotation of a predetermined image pattern; recognition means for determining, on the basis of image information captured by the image capturing means, the direction of rotation of the image pattern and recognizing the information for specifying the image, which can be provided as the content; and content obtaining means for obtaining the image serving as the corresponding content on the basis of the information recognized by the recognition means.

Here, content designates various types of content provided by information services. In other words, information, such as an image, music, a document, and a practical function, provided by information services is referred to as content.

The terminal of the present invention captures, using a CCD camera or the like, an image of an information-including region in an information input medium including information for specifying an image that can be provided as content to the terminal, the information being encoded by the direction of rotation of a predetermined image pattern. The information input medium may include encoded information generated by encoding a plurality of pieces of information for individually specifying a plurality of images. A region including encoded information generated by encoding information for specifying a desired image, which is among the plurality of images, may be selected to be captured.

Subsequently, captured image information is processed to determine the direction of rotation of the image pattern, thereby recognizing the information for specifying the image, which can be provided as the content. On the basis of the recognized information, the image serving as the corresponding content is obtained from, for example, a site on the Web or a storage medium.

According to the present invention, an image serving as desired content can be obtained simply by capturing an image of an information-including region in an information input medium. The burden on a user of obtaining content is alleviated. According to the present invention, since the encodable code length is freely selected, an increase in the number of pieces of content that can be provided is handled appropriately and flexibly.

The terminal of the present invention may further include detection means for detecting the movement of the terminal; and scrolling means for moving, when displaying an image larger than a display screen of the display unit on the display screen, the position of the image displayed on the display screen in accordance with the movement of the terminal, the movement being detected by the detection means.

Accordingly, an operation unit for scrolling and displaying an image larger than the display screen becomes unnecessary, and an image can be scrolled and displayed in a manner intimately associated with human instincts.

The terminal of the present invention may further include table obtaining means for obtaining a table for assigning individual functions to a plurality of partial regions constituting the image obtained as the content by the content obtaining means; and execution means for executing, on the basis of the table obtained by the table obtaining means, a function assigned to a region displayed on the display screen by moving the image by the scrolling means.

Functions assigned to individual partial regions constituting an image include, for example, a function of obtaining various types of content, such as an image, music, a document, and an application program, from a site on the Web; a function of using various services, such as a map search and a dictionary search, on the Web; and a function of operating, when the terminal is used as a terminal for remote-controlling various units by infrared communication, these units.

To execute a function of obtaining content from a site on the Web or the like, the table may include, as information for assigning functions to individual partial regions constituting an image, the necessary location of content on the Web for executing the function.

According to the present invention, an image with various functions assigned to individual regions thereof may be designated as a background image on the display screen. By scrolling the screen, a region is selected, and a function assigned to this region is selected and executed. Even when the display screen is small, various types of content can be obtained by changing the background image with simple operations.

According to the present invention, the location of a plurality of images and the location of a plurality of tables may be a site on the Web or a removable storage medium.

According to another aspect of the present invention, a content obtaining method for a terminal having a display unit that can display an image and an image capturing unit for capturing an image includes a step of capturing an image of an information-including region in an information input medium including information for specifying an image that can be provided as content, the information being encoded by the direction of rotation of a predetermined image pattern; a step of determining, on the basis of captured image information, the direction of rotation of the image pattern and recognizing the information for specifying the image, which can be provided as the content; and a step of obtaining the image serving as the corresponding content on the basis of the recognized information.

According to the present invention, an image serving as desired content can be obtained simply by capturing an image of an information-including region in an information input medium. The burden on a user of obtaining content is alleviated. According to the present invention, since the encodable code length is freely selected, an increase in the number of pieces of content that can be provided is handled appropriately and flexibly.

According to another aspect of the present invention, a content obtaining method for a terminal having a display unit that can display an image, a scrolling function of moving, when displaying an image larger than a display screen of the display unit on the display screen, the position of the image displayed on the display screen, and an image capturing unit for capturing an image includes a step of capturing an image of an information-including region in an information input medium including information for specifying an image that can be provided as content, the information being encoded by the direction of rotation of a predetermined image pattern; a step of determining, on the basis of captured image information, the direction of rotation of the image pattern and recognizing the information for specifying the image, which can be provided as the content; a step of obtaining the image serving as the corresponding content on the basis of the recognized information; a step of displaying the image obtained as the content on the display screen; a step of obtaining a table for assigning individual functions to a plurality of partial regions constituting the image obtained as the content; and a step of executing, on the basis of the obtained table, a function assigned to a region displayed on the display screen by moving the image by the scrolling function.

According to the present invention, an image with various functions assigned to individual regions thereof may be designated as a background image on the display screen. By scrolling the screen, a region is selected, and a function assigned to this region is selected and executed. Even when the display screen is small, various types of content can be obtained by changing the background image with simple operations.

According to another aspect of the present invention, a content providing method for providing content to a terminal having a display unit that can display an image and an image capturing unit for capturing an image includes providing an information input medium including information for specifying an image that can be provided as content, the information being encoded by the direction of rotation of a predetermined image pattern; causing the image capturing unit of the terminal to capture an image of an information-including region in the information input medium; causing the terminal to recognize the information on the image, which can be provided as the content, on the basis of captured image information; and providing the image serving as the corresponding content to the terminal in response to a request based on the recognition result from the terminal.

According to the present invention, an image serving as content requested by a terminal can be provided to the terminal simply by capturing, by the terminal, an image of an information-including region in an information input medium. Content distribution thus becomes smooth.

In the content providing method for providing content to the terminal according to the present invention, the terminal may be charged a fee for the content provided.

By charging a legitimate fee for content provided, the quality of the content is improved, and the content distribution service is improved.

According to another aspect of the present invention, a content providing method for providing content to a terminal having a display unit that can display an image, a scrolling function of moving, when displaying an image larger than a display screen of the display unit on the display screen, the position of the image displayed on the display screen, and an image capturing unit for capturing an image includes providing an information input medium including information for specifying an image that can be provided as content, the information being encoded by the direction of rotation of a predetermined image pattern; causing the image capturing unit of the terminal to capture an image of an information-including region in the information input medium; causing the terminal to recognize the information on the image, which can be provided as the content, on the basis of captured image information; providing the image serving as the corresponding content to the terminal in response to a request based on the recognition result from the terminal; and providing a table for assigning individual functions to a plurality of partial regions constituting the image and for executing a function assigned to an arbitrary region displayed on the display screen by the scrolling function.

According to the present invention, an image, serving as content, having various functions, serving as added values, assigned to individual regions thereof is provided to a terminal. Content distribution thus becomes smooth.

In the content providing method for providing content to the terminal according to the present invention, the terminal may be charged a fee for the content provided.

By charging a legitimate fee for content provided, the quality of the content is improved, and the content distribution service is improved.

According to another aspect of the present invention, an information input medium includes information for specifying an image that can be provided as content to a terminal having a display unit that can display an image and an image capturing unit for capturing an image, the information being encoded by the direction of rotation of a predetermined image pattern.

By capturing, using a capturing unit of a terminal, an information-including region in the information input medium of the present invention, the terminal recognizes, from captured image information, information for specifying an image that can be provided as content. On the basis of the recognition result, the image serving as the corresponding content is obtained from, for example, a site on the Web or a storage medium. The burden on a user of obtaining content is alleviated. According to the present invention, since the encodable code length is freely selected, an increase in the number of pieces of content that can be provided is handled appropriately and flexibly.

### Brief Description of the Drawings

Fig. 1 is a perspective view that schematically shows the appearance of a terminal according to an embodiment of the present invention.
Fig. 2 is a block diagram showing the hardware configuration of this terminal.
Figs. 3A and 3B are block diagrams showing part of the structure of a program and data for the terminal.
Figs. 4A and 4B are illustrations for describing a scrolling display function of the terminal.
Fig. 5 is an illustration showing an example of a content table.
Fig. 6 is an illustration showing an example of an information input medium including recognition target images.
Fig. 7 is an illustration showing an example of a recognition target image.
Fig. 8 is an illustration showing the relationship between a code and a rotation mode of an image pattern included in a recognition target image.
Fig. 9 is an illustration showing the flow of a process of recognizing a code from a recognition target image, which is included in the information input medium.
Fig. 10 is an illustration showing a process of extracting image patterns.
Fig. 11 is an illustration showing an example of a direction-and-characteristics table.
Fig. 12 is an illustration showing an example of a candidate code group for use in determining the code recognition result.
Fig. 13 is an illustration showing an example of a code conversion table.
Fig. 14 is an illustration showing the configuration of a network system that provides a background image, a content table, and content to the terminal.
Figs. 15A and 15B are flowcharts showing the operation of the terminal.
Fig. 16 shows other examples of image patterns.

### Best Mode for Carrying Out the Invention

Embodiments of the present invention will now be described in detail with reference to the drawings.

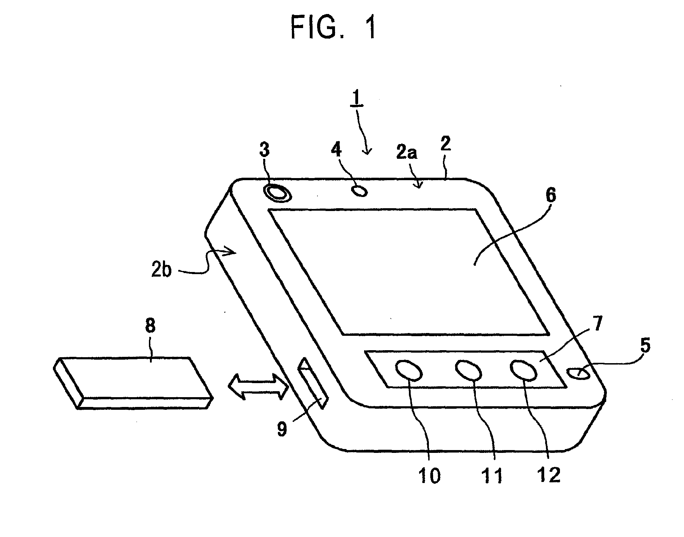

Fig. 1 is a perspective view that schematically shows the appearance of a terminal 1 according to an embodiment of the present invention.

As shown in Fig. 1, the terminal 1 includes a casing 2, which is, for example, of a size that can be held in the hand of a user. On a front surface 2a of the casing 2, a camera 3 serving as image capturing means, a microphone 4, a speaker 5, a display unit 6, and an operation region 7 are arranged. A side surface 2b of the casing 2 has, for example, a mounting section 9 into which a stick-shaped storage medium 8 is removably connected. The camera 3 is, for example, a CCD camera. The display unit 9 is, for example, a color liquid crystal display (LCD). The operation region 7 includes an OK button 10, an Undo button 11, a camera capture button 12, and the like.

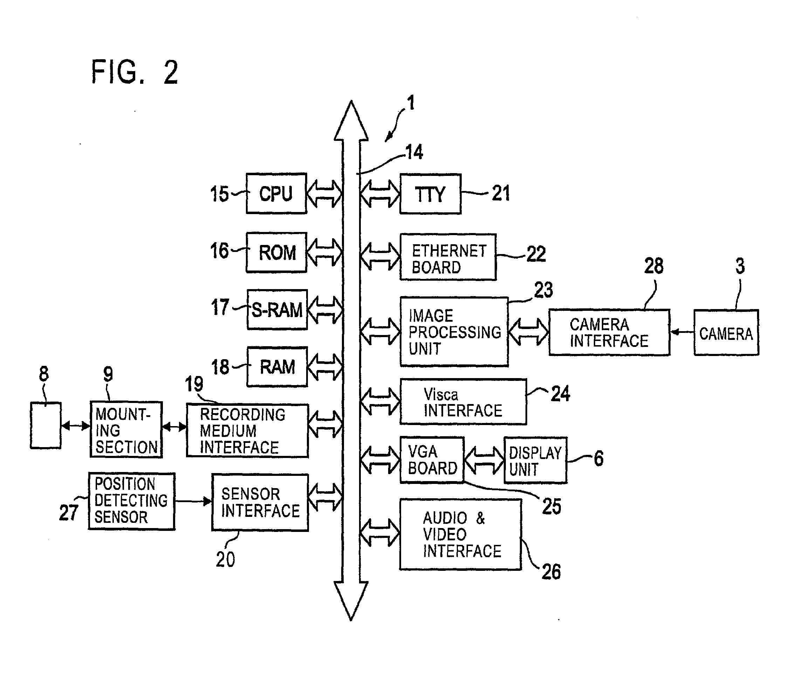

Fig. 2 is a block diagram showing the hardware configuration of the terminal 1.

As shown in Fig. 2, the terminal 1 includes a CPU 15, a ROM 16, an S-RAM (static RAM) 17, a RAM 18, a storage medium interface 19, a sensor interface 20, and various interfaces including, for example, a TTY (Tele Typewriter) 21, an Ethernet (registered trademark) board 22, an image processing unit 23, a Visca interface 24, a VGA board 25, and an audio & video interface 26, all of which are connected to a main bus 14.

The CPU 15 controls the overall terminal 1. The ROM 16 stores a necessary program for the CPU 15 to operate. The S-RAM 17 stores, for example, a content table and a code conversion table, which will be described later. The RAM 18 is used as a workspace for the CPU 15 when the CPU 15 performs a process.

The mounting section 9 is connected to the storage medium interface 19, thereby enabling data communication with the storage medium 8 connected to the mounting section 9.

A position detecting sensor 27 is connected to the sensor interface 20. The position detecting sensor 27 may include, for example, an acceleration sensor and/or an angular velocity sensor. The acceleration sensor detects biaxial or triaxial acceleration of spatial movement of the terminal 1 held in the hand of the user. For example, the acceleration sensor is used as a sensor for detecting biaxial acceleration to detect a longitudinal component and a lateral component of the acceleration applied to the terminal 1. In each component, time integration operation is performed to compute a speed component and a displacement component. The computation results are used for scrolling and displaying an image, which will be described later.

The TTY (Tele Typewriter) 21 is connected to the various buttons 10, 11, and 12 arranged in the above-described operation region.

The Ethernet board 22 is connectable to Ethernet. The Ethernet board 22 is connected via Ethernet to, for example, a host, and, via this host to the Internet. Alternatively, instead of connecting via the host, the terminal 1 may directly establish an online connection to the Internet, thereby connecting to a server that offers a content providing service.

A camera interface 28 is connected to the image processing unit 23. The above-described CCD camera 3 is connected to this camera interface 28. An image captured by the CCD camera 3 is imported as a digital image through the camera interface 28 into the terminal 1 and displayed on the display unit 6.

An external personal computer or the like is connected to the Visca interface 28. Via this interface, the terminal 1 is controlled in various manners.

The LCD serving as the above-described display unit 6 is connected to the VGA board 25.

An audio & video unit is connected to the audio & video interface 26. A signal from the audio & video unit is imported via the interface 26 into the terminal 1.
Reversely, an audio signal or an image signal is output to the audio & video unit.

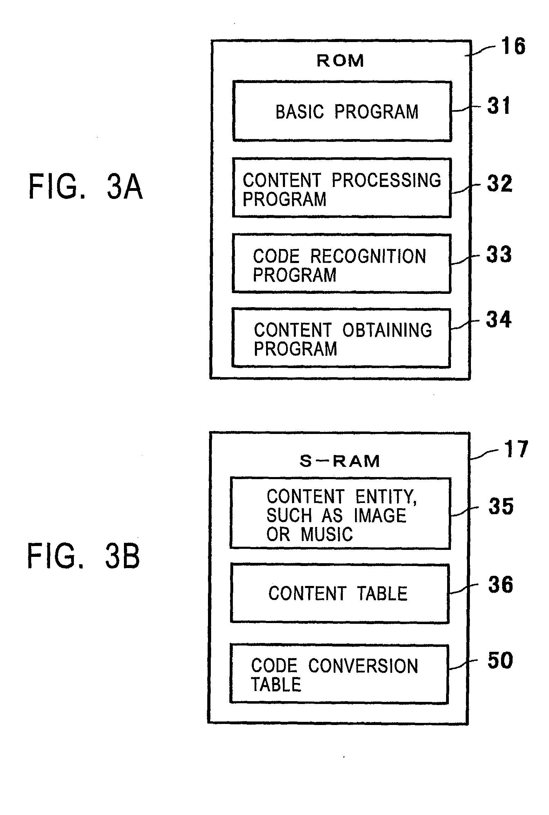

Figs. 3A and 3B show part of the structure of a program and data stored in the ROM 16 and the S-RAM 17, respectively.

The ROM 16 stores a basic program 31, a content processing program 32, a code recognition program 33, and a content obtaining program 34.

The basic program 31 is necessary for the terminal 1 to operate.

The content processing program 32 is for processing an image, sound, a document, and the like, which are obtained as content. The content processing program 32 includes, for example, an image rendering program, a sound playing program, and a document processing program.

The code recognition program 33 is for determining, on the basis of image information generated by capturing, using the camera 3, an image of an information-including region of an information input medium including information (code) for specifying an image that can be provided as content, the information being encoded by the direction of rotation of a predetermined image pattern, the direction of rotation of the image pattern and recognizing the information (code) for specifying the image, which can be provided as the content.

The content obtaining program 34 is for obtaining a desired background image and a content table by referring to a code conversion table, which will be described later, on the basis of the code recognized by the code recognition program 33.

The above-described code recognition program 33 and the content obtaining program 34 may be included in the basic program 31.

The S-RAM 71 stores content entities 35, such as an image, sound, a document, and an application program, a content table 36, a code conversion table 50, and the like. The content entities 35, the content table 36, and the code conversion table 50 may be stored in the storage medium 8, which can be removably connected to the terminal 1.

The terminal 1 has a scrolling display function. This scrolling display function is performed by hardware or software, or both.

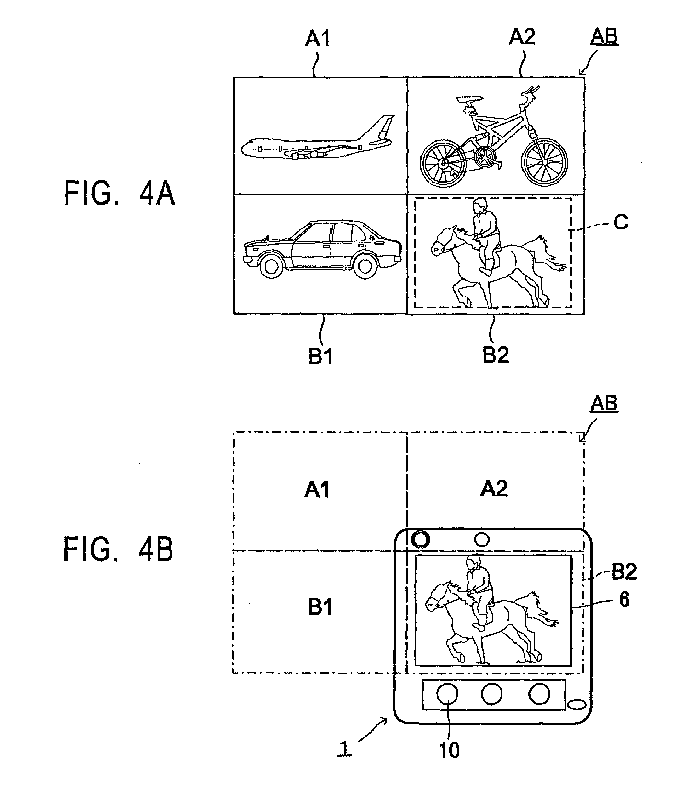

Using Figs. 4A and 4B, the scrolling display function of the terminal 1 is described.

Reference symbol AB denotes the entire background image. The entire background image AB consists of, for example, a plurality (four in this example) of partial image regions A1, A2, B2, and B3, which are generated by partitioning the sides of the overall background image AB into equal portions. The number of partial image regions is variable.

Region C enclosed by the dotted lines in the illustration is the displayable range of the background image AB on the actual display screen. Specifically, the background image AB is larger than the actual display screen. On the display screen, part of the entire background image AB is displayed at all times.

Upon rightward movement of the terminal 1, the position detecting sensor 27 detects the movement, and the background image AB is scrolled to the right relative to region C on the display screen. In contrast, upon leftward movement of the terminal 1, the position detecting sensor 27 detects the movement, and the background image AB is scrolled to the left relative to region C on the display screen. Similarly, upon upward (downward) movement of the terminal 1, the position detecting sensor 27 detects the movement, and the background image AB is scrolled to the top (bottom) relative to region C on the display screen.

As described above, the user can view the entire background image AB by moving the terminal 1 right, left, up and down. The user scrolls the entire background image AB to display a desired partial image region on region C on the display screen and presses the OK button 10, thereby selecting this partial image region.

The regions A1, A2, B1, and B2 of the above-described background image AB are associated, in the content table 36, with pieces of content that can be obtained from the Web and/or the removable storage medium 8. Upon selection of a region, content associated with the selected region in the content table 36 is obtained from the Web or the removable storage medium 8. In other words, the regions A1, A2, B1, and B2 of the background image AB are provided with individual functions by the content table 36.

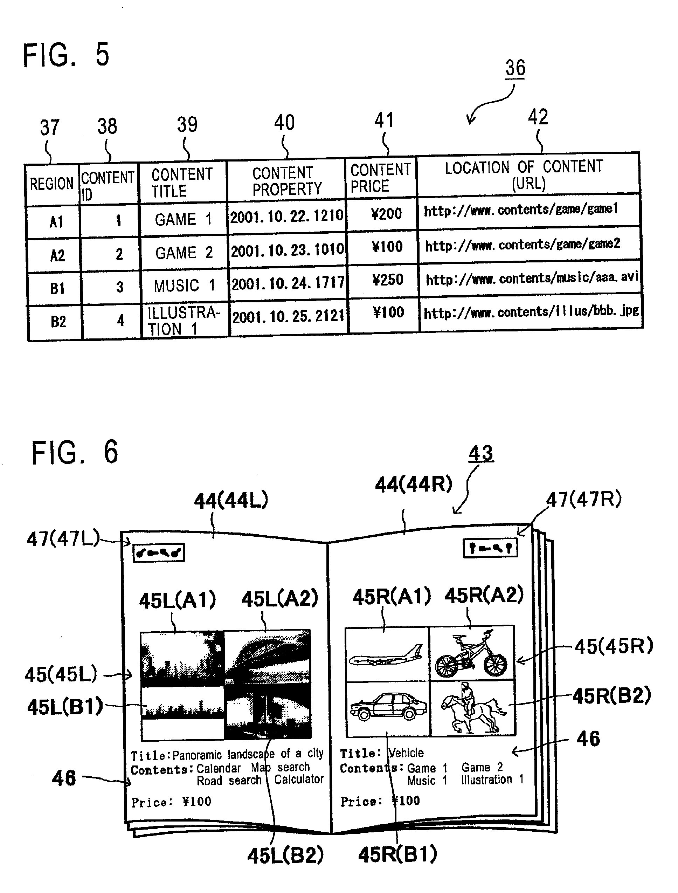

Fig. 5 shows an example of the content table 36.

As shown in the illustration, the content table 36 includes at least a content ID 38, a content title 39, a content property 40, a content price 41, and the location of content (URL) 42, which are registered for each of the partial image regions A1, A2, B1, and B2 listed as items under a region 37.

The content ID 38 includes identification information that is uniquely assigned to individual pieces of content in order to enable the system to distinguish one piece of content from another.

The content title 39 includes titles given to individual pieces of content in order to enable, for convenience, the user or the like to distinguish one piece of content from another.

The content property 40 includes property information, such as the obtained date, creation date, and version number of each piece of content.

The content price 41 designates a fee charged to the user when the user obtains or uses each piece of content.

The location of content 42 includes information, such as URL (Uniform Resource Locator), indicating the location of each piece of content on the Web.

The terminal 1 obtains the above-described content table and the background image information from the outside and stores the obtained information in the S-RAM 17 or the removable storage medium 8.

A method of obtaining a background image and a content table includes, for example, a method in which a site that offers a service for providing background images and content tables is established on the Web, and the terminal 1 accesses this site and downloads a desired background image and a content table associated with the desired background image; and a method in which the stick-shaped storage medium 8 having background images and content tables stored therein is purchased and connected to the terminal 1, and a desired background image and a content table associated with the desired background image are read from the storage medium 8.

In the former case, one or a plurality of sites may offer a service for providing background images and content tables.

In the latter case, a background image and a content table title indicating the location of a content table may be stored in the storage medium 8, and the content table may be distributed to the terminal 1 from a site on the Web.

In the former case in which a background image and a content table associated with this background image are obtained from a site on the Web, various background images and information associated with these background images are introduced to the user to prompt the user to obtain a background image and information associated with the background image. The user thus selects a desired background image from among the various background images, and the selected background image and a content table are provided to the user.

The terminal 1 uses, as means for achieving the above-described mechanism, an encoding technique of encoding a code for specifying a background by the direction of rotation of a predetermined image pattern.

This encoding technique will now be described.

Fig. 6 exemplarily shows recognition target images 47 including information encoded by the directions of rotation of image patterns and an information input medium 43 including these recognition target images 47.

The information input medium 43 shown in the illustration is, for example, a book-like medium. Each page 44 of the information input medium 43 includes, for example, at least (a sample of) a background image 45, detailed information 46 including an image title, content titles associated therewith, and a price, which serve as information on the background image 45, and the above-described recognition target image 47. The recognition target image 47 is information generated by encoding a code associated with the background image on the page.

For example, the entire background image (45L) on the left page (44L) consists of four different city partial images 45L(A1), 45L(A2), 45L(B1), and 45L(B2). This background image (45L) has the image title "Panoramic landscape of a city".

The content tiles indicate the details of functions assigned to the above-described four different city partial images 45L(A1), 45L(A2), 45L(B1), and 45L(B2). In this example, the practical functions "calendar", "map search", "road search", and "calculator" are assigned to the individual city partial images.

These practical functions may be, for example, services offered by a specific site on the Web or application programs executed on the terminal 1. In the former case, the location of content, which is included in the content table, is a page on a website offering the services. In the latter case, the location of content is a page for downloading the application programs.

The entire background image (45R) on the right page (44R) consists of four different vehicle partial images 45R(A1), 45R(A2), 45R(B1), and 45R(B2). This background image (45R) has the image title "vehicle". The above-described four different partial images 45R(A1), 45R(A2), 45R(B1), and 45R(B2) are provided with the functions "game 1", "game 2", "music 1", and "illustration 1", respectively. For example, the content title such as "music 1" or "illustration 1" indicates that this is content to be downloaded and that this is music played or an image displayed on the terminal 1.

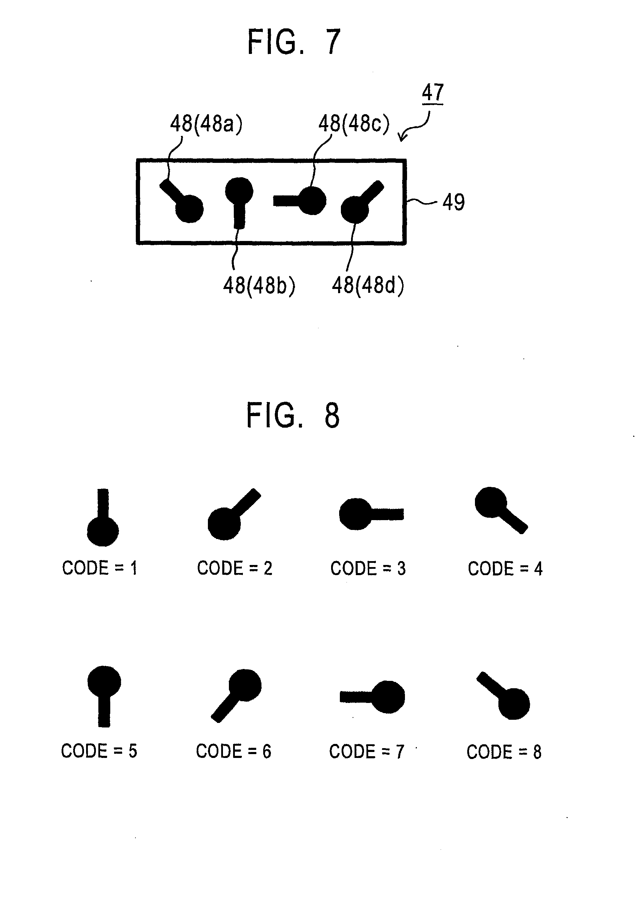

Fig. 7 shows an example of the recognition target image 47. As shown in the illustration, the recognition target image 47 includes at least one image pattern 48 (48a, 48b, 48c, and 48d) and a rectangular frame 49 surrounding these image patterns 48 (48a, 48b, 48c, and 48d).

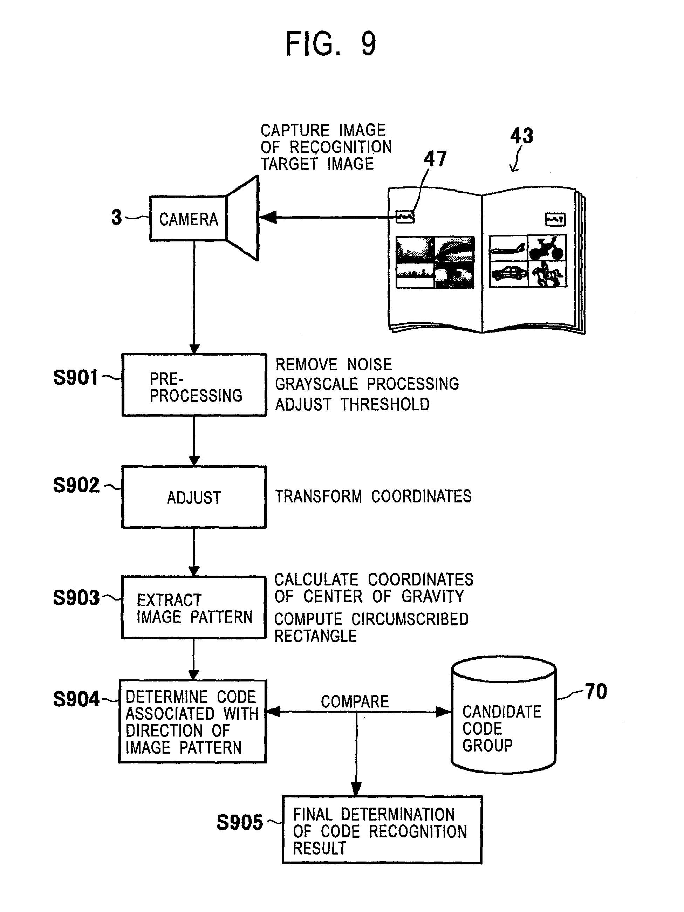

As shown in Fig. 8, each image pattern 48 has eight rotation modes. Depending on the direction of rotation of each image pattern 48, eight types of codes are assigned to each image pattern 48. For example, four image patterns define 8⁴ = 4096 types of codes. For example, the recognition target image 47 shown in Fig. 7 indicates the code "8572".

Fig. 9 shows the flow of a process of recognizing a code from the recognition target image 47 included in the information input medium 43.

The user of the terminal 1 refers to the sample of the background image 45 on each page 44 of the information input medium 43, such as that shown in Fig. 6, and the detailed information 46 on the background image 45. When the user sees a desired background image, the user captures, using the camera 3 of the terminal 1, an image of the recognition target image 47 on that page 44.

To capture an image of the recognition target image 47 and recognize a code, the user operates buttons and changes the mode of the terminal 1 from a normal image capturing mode to a code recognition mode. Upon entering the code recognition mode, the terminal 1 performs a code recognition process, which is described below, on image data captured by the camera 3.

The image data is pre-processed. That is, the image data is subjected to noise removal, gray-scale processing, and threshold adjustment (step 901). The frame 49 is detected from the entire image, and image data within the detected frame 49 is cut out. On the basis of the slope of the detected frame 49 and the length of each side of the detected frame 49, coordinate transformation is performed to correct the slope and the size of the image data within the frame 49 (step 902).

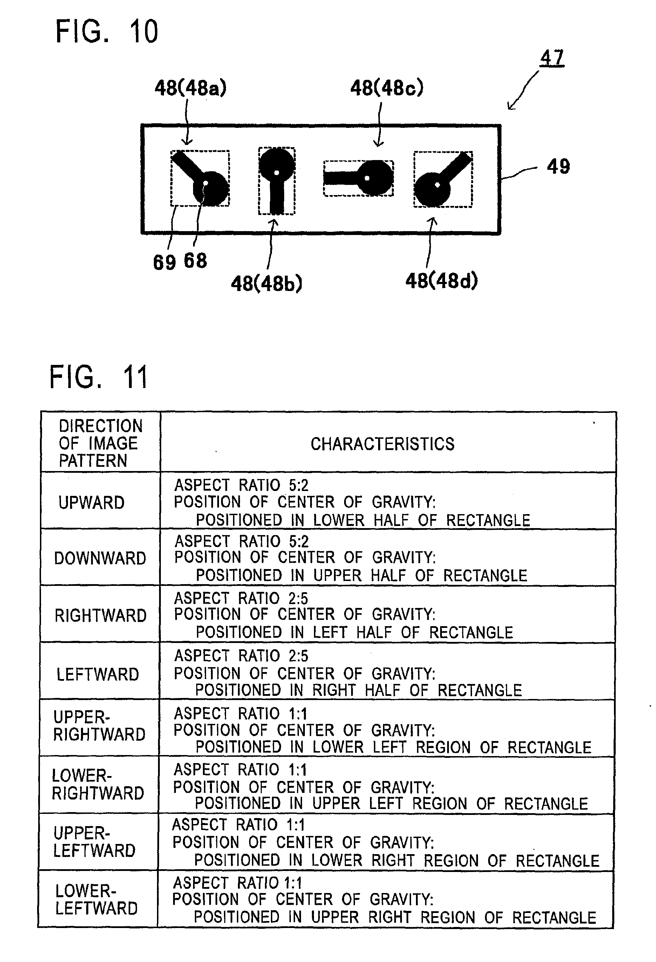

Subsequently, a process of extracting individual image patterns from the corrected image data in the frame 49 is performed (step 903). This image pattern extracting process is performed by, for example, as shown in Fig. 10, computing the coordinates of the grayscale center of gravity 68 and a circumscribed rectangle 69 of each of the individual image patterns 48.

In reference to, as shown in Fig. 11, a direction-and-characteristics table having parameters including the coordinates of the grayscale center of gravity and the aspect ratio of the circumscribed rectangle of each image pattern 48, which are computed by the image pattern extracting process, the rotation mode (direction) of each image pattern 48 is detected. A code associated with the detected direction of each image pattern is detected on the basis of information, which is shown in Fig. 8, indicating the association between the direction of each image pattern and a code (step 904).

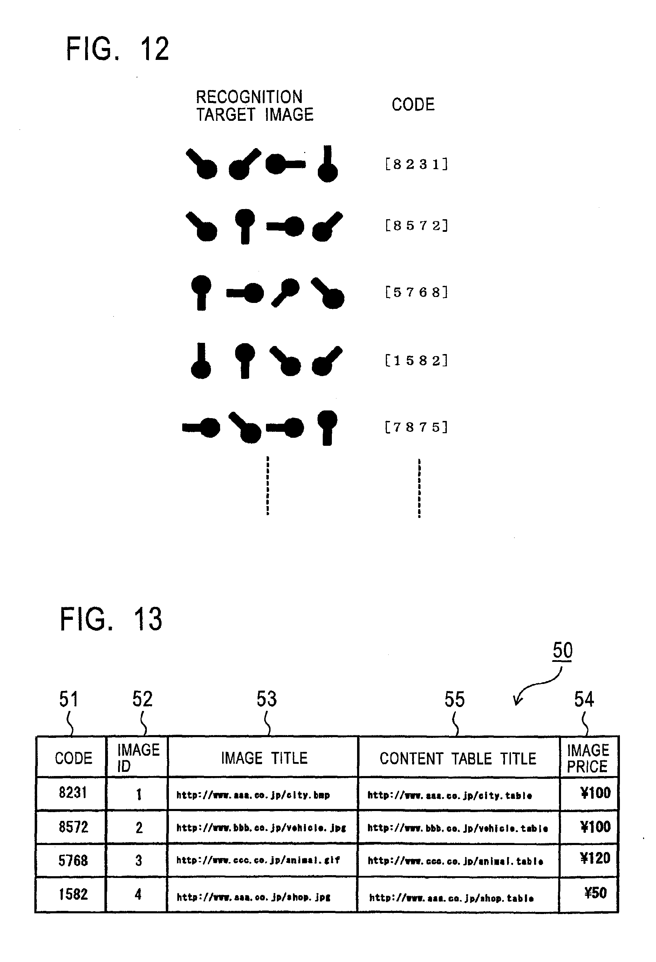

The codes detected for four image patterns are compared with those in a predefined code candidate group 70, such as that shown in Fig. 12, and a code that is closest in distance to the detected code is detected as the result of recognizing the recognition target image 47 (step 905). The distance refers to the total of differences between the detected codes and the defined codes for the four individual image patterns. If the distance exceeds a predetermined threshold, the recognition fails.

Accordingly, the terminal 1 obtains a code serving as the result of recognizing the recognition target image 47 shown on the page 44 having a user-desired background image, which is among the background images included in the information input medium 43.

A method of specifying a background image and a content table on the basis of the code detected by recognizing the recognition target image 47 will now be described.

To specify, on the basis of the code, a background image and a content table associated with the code, for example, the code conversion table 50 shown in Fig. 13 is used.

As shown in the illustration, the code conversion table 50 includes a code 51, an image ID 52, an image title 53, an image price 54, and a content table title 55, which are registered in association with one another.

The code 51 includes codes that are uniquely assigned to individual items in the code conversion table 50. Each of these codes is encoded by the directions of rotation of the above-described image patterns to yield the image patterns 48 included in the above-described recognition target image 47.

The image title 53 is information for specifying a background image and includes information, such as URL (Uniform Resource Locator), indicating the location of a background image on the Web.

The image ID 52 is information for enabling the system to distinguish individual background images.

The image price 54 is a fee charged for obtaining a background image and a content table.

The content table title 55 is information for specifying a content table associated with a background image and includes information, such as URL (Uniform Resource Locator), indicating the location of a content table on the Web.

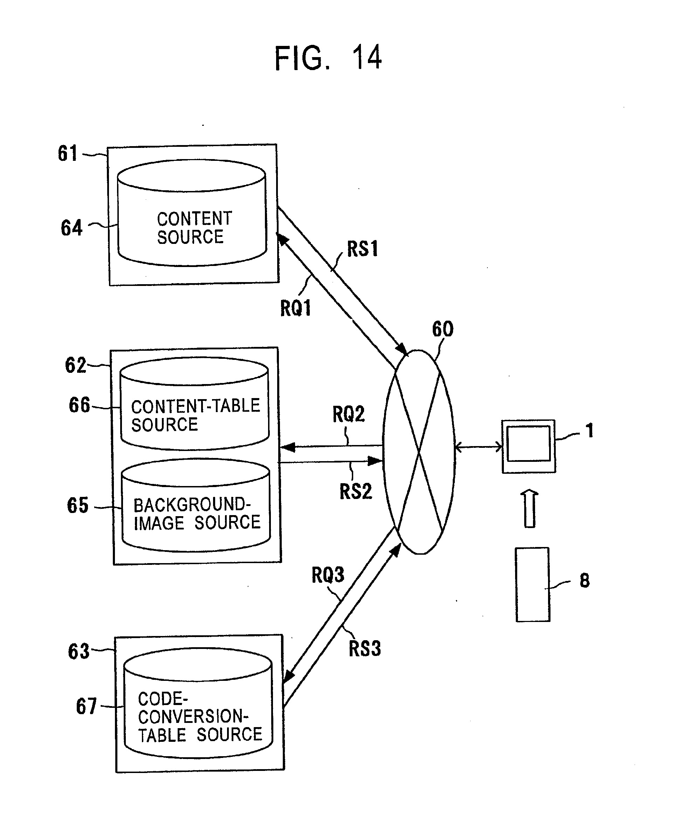

Fig. 14 is an illustration showing the configuration of a system that provides a background image, a content table, and content to the terminal 1.

As shown in the illustration, a content providing site 61 for providing content, a background-image/content-table providing site 62 for providing a background image and a content table, and a background-image/content-table providing site 62 for providing a code conversion table are located on the Web (Internet) 60. Alternatively, a background image and a content table may be provided by different sites. Content, a background image, a content table, and a code conversion table may be obtained from the same site. In other words, the providing sources of content, a background image, a content table, and a code conversion table are only required to be somewhere on the Web. Alternatively, the terminal 1 may obtain content, a background image, a content table, and a code conversion table directly from the storage medium 8.

The content providing site 61 manages a content source 64. The content providing site 61 offers a service for providing, as a response RS1 in response to a content distribution request RQ1 from the terminal 1, the corresponding content to the terminal 1.

The background-image/content-table providing site 62 manages a background-image source 65 and a content-table source 66. The background-image/content-table providing site 62 offers a service for providing, as a response RS2 in response to a background-image/content-table distribution request RQ2 from the terminal 1, the corresponding background image and the corresponding content table to the terminal 1.

The code-conversion-table providing site 63 manages a code-conversion-table source 67. The code-conversion-table providing site 63 offers a service for providing, as a response RS3 in response to a code-conversion-table distribution request RQ3 from the terminal 1, the corresponding code conversion table to the terminal 1. Alternatively, the terminal 1 may include a default code conversion table.

Alternatively, the terminal 1 may read the storage medium 8 connected thereto and obtain content, a background image, a content table, and a code conversion table from the storage medium 8.

The operation of the terminal 1 of this embodiment will now be described.

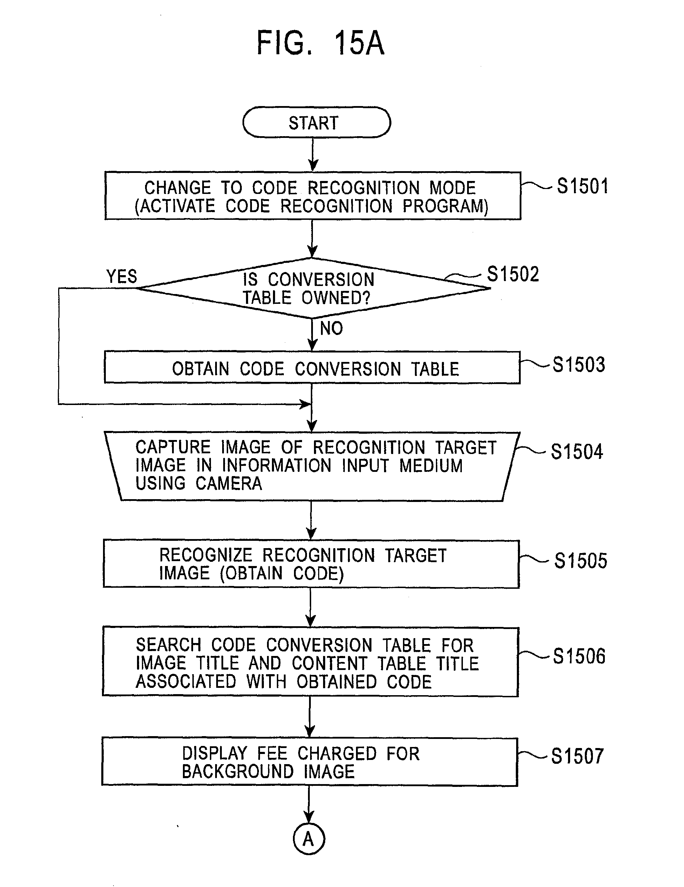

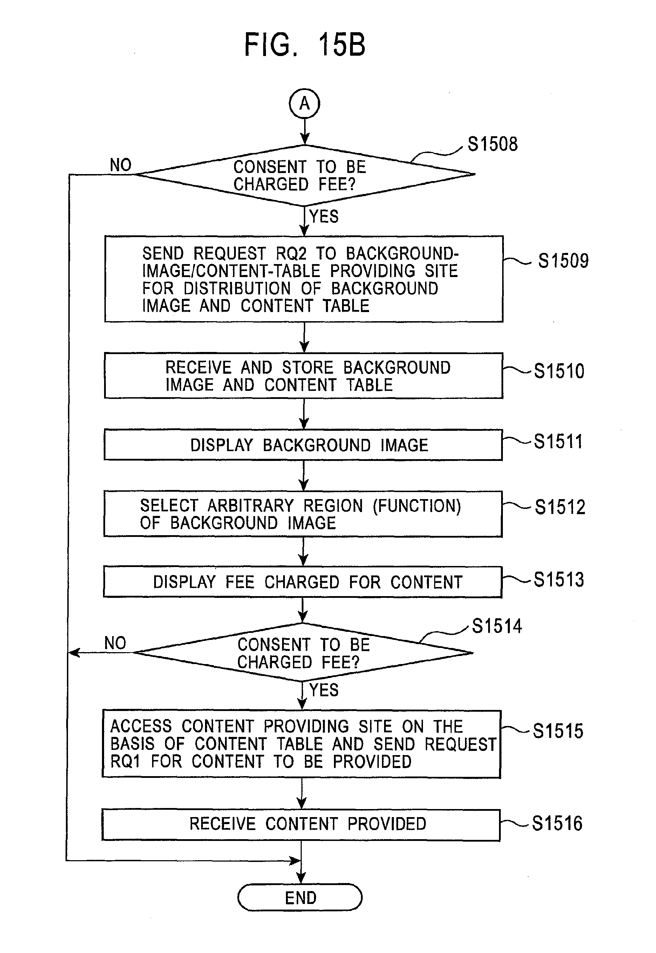

Figs. 15A and 15B show the flow of operation of the terminal 1 when obtaining a background image, a content table, and content from the Web.

When the user of the terminal 1 wants to obtain a background image and a content table from the information input medium 43 shown in Fig. 6, the user operates buttons to make the terminal 1 enter the code recognition mode. When the terminal 1 enters the code recognition mode, the code recognition program 33 is activated (step 1501). From this point onward, image data captured by the camera 3 is subjected to the above-described code recognition.

After being activated, the code recognition program 33 determines whether the code conversion table 50 is owned (step 1502). When the code recognition program 33 determines that there is no owned code conversion table 50, a process of obtaining the code conversion table 50 from the Web 60 or the storage medium 8 is performed (step 1503). When the terminal 1 is provided in advance with the default code conversion table 50, there is no need to obtain the code conversion table 50 from the outside.

A possible method of obtaining the code conversion table 50 from the outside is as follows. In the terminal 1, a default URL of the code-conversion-table providing site 63 is registered in advance. The code recognition program 33 reads this URL, establishes an online connection to the code-conversion-table providing site 63, and automatically obtains the code conversion table 50 from the site 63.

When the owned code conversion table 50 is detected (YES in step 1502), the camera 3 captures an image of a region including the recognition target image 47 on a page showing a desired background image, which is among background images introduced in the information input medium 43 (step 1504).

The above-described recognition process is performed on information on the recognition target image 47 captured by the camera 3 to detect a code associated with the background image selected by the user (step 1505).

The code recognition program 33 searches the code conversion table 50 for the image title 53 and the content table title 55 associated with the code (step 1506).

For example, when the camera 3 captures an image of the recognition target image (47R) on the right page (44R) in Fig. 6, the code "8572" is detected as the recognition result. On the basis of this code, the code conversion table 50 shown in Fig. 12 is searched to detect the image title and the content table title of the item with the image ID "2".

After a fee-charging process, which will be described later, is performed (steps 1507 and 1508), the terminal 1 transmits the distribution request RQ2 for a desired background image and a content table to the background-image/content-table providing site 62 (step 1509).

As the response RS2 in response to the request RQ2 from the terminal 1, the background-image/content-table providing site 62 distributes the corresponding background image and the content table to the terminal 1. The terminal 1 receives the background image and the content table and stores them in the S-RAM 17 (step 1510).

Accordingly, the terminal 1 obtains a necessary content table (Fig. 5) for obtaining a background image having the image name "vehicle" and various functions assigned to individual partial images of the background image.

From this point onward, the obtained background image is displayed on the terminal 1 (step S1511). The background image is scrolled to display an arbitrary partial image region of the background image on the display screen. By pressing the OK button 10, the function assigned to the displayed partial image region is selected (step 1512).

In the case shown in Figs. 4A and 4B, for example, the region B2 is selected. Information associated with the selected region B2 is read from the content table 36 shown in Fig. 5, and, for example, the following process is performed.

After a fee-charging process, which will be described later, is performed (steps 1513 and 1514), the terminal 1 reads the location of content 42 associated with the region B2 from the content table 36. The terminal 1 accesses the content providing site 61 indicated by the location of content 42 and requests the content providing site 61 to provide content (step 1515).

In response to this request RQ1, the content providing site 61 provides the content to the terminal 1 (step 1516).

The fee-charging process will now be described.

In the content table 36, the content price 41 is specified for each piece of content. The content price 41 is a fee charged for obtaining and/or using content. On the basis of the content price 41, the fee-charging process is performed on the content provided to the terminal 1.

For example, after a partial image region of a background image is selected (step 1512), the content price 41 of content associated with this selected region is read from the content table 36 and displayed on the display screen of the terminal 1, thereby seeking the user's consent to be charged the fee (step 1513). When the user consents to be charged the fee (YES in step 1514), the terminal 1 is permitted to receive the content distributed from the content providing site 61.

The terminal 1 transmits the user ID, content ID, content price, and the like to the content providing site 61 via the Web 60. On the basis of these pieces of information, the fee-charging process is performed on the image provider side. Alternatively, a fee charged for obtaining and/or using the content for a predetermined period may be calculated by the terminal 1, and this charged fee and the user ID may be transmitted to the image provider.

In the code conversion table 50, the image price 54 is specified for each background image. On the basis of the image price 54, the fee-charging process is performed on the background image provided to the terminal 1.

For example, after a code serving as the result of recognizing the recognition target image 47 is detected (step S1505), the terminal 1 reads the image price 54 of a background image associated with this code from the code conversion table 50, displays the image price 54 on the display screen of the terminal 1, and seeks the user's consent to be charged the fee (step 1507). When the user consents to be charged the fee (YES in step 1508), the terminal 1 is permitted to receive the background image and the content table distributed from the background-image/content-table providing site 62.

The terminal 1 transmits the user ID, image ID, image price, and the like to the background-image/content-table providing site 62 via the Web 60. On the basis of these pieces of information, the fee-charging process is performed on the background-image/content-table provider side.

Alternatively, a fee charged for obtaining and/or using the background image and the content table for a predetermined period may be calculated by the terminal 1, and this charged fee and the user ID may be transmitted to the background-image/content-table provider.

In a case in which a background image and a content table are obtained from the storage medium 8, the storage medium 8 stores a program for performing an online fee-charging process in response to the reading of a background image. When the reading of a background image from the storage medium 8 starts, this program reads the image price 54 of this background image from the code conversion table 50, displays the image price 54 on the display screen of the terminal 1, and seeks the user's consent to be charged the fee. When the user consents to be charged the fee, the program permits the terminal 1 to read the desired background image from the storage medium 8. In this case, the program establishes an online connection between the terminal 1 and a fee-charging server on the Web and transmits the image ID and image price of the read background image and the user ID to the server. This enables the server to perform the fee-charging process.

When the right to the background image and the content table is purchased simultaneously at the time the storage medium 8 is purchased, the above-described fee-charging function is unnecessary.

As described above, the terminal 1 can obtain a user-desired background image and a necessary content table for using functions provided as added values of this background image by capturing, using the camera 3 included in the terminal 1, an image of the recognition target image 47 included in the information input medium 43 and performing the recognition process. In other words, a background image and a content table can be obtained easily without searching, by the user, for the locations of the background image and the content table.

According to the encoding system in which a code for specifying a background image that can be provided as content and a content table is encoded by the direction of rotation of each image pattern, the encodable code length is freely selected. Therefore, an increase in the number of pieces of content that can be provided is handled appropriately and flexibly.

The terminal 1 can designate an image with various functions assigned to individual regions thereof as a background image on the display screen. By scrolling the screen, a region is selected, and a function assigned to this region is selected and executed. Even when the size of the display screen is small, various functions become available for use by changing the background image with simple operations.

The present invention is not limited to the above-described embodiment.

The number of partial images constituting a background image is not limited to four. The number may be less than four or greater than or equal to five.

The screen may scroll in units of regions. The scrolling resolution may be changed by settings.

The storage medium may store both a background image and a content table. Alternatively, the storage medium may store, instead of a background image, a content table and/or content.

For one background image, a table obtained from a plurality of content tables may be selected. In other words, functions assigned to regions of a background image may be selected.

The storage medium may be a medium, such as a copy-guarded memory device, utilizing an illegal-copy protection technique.

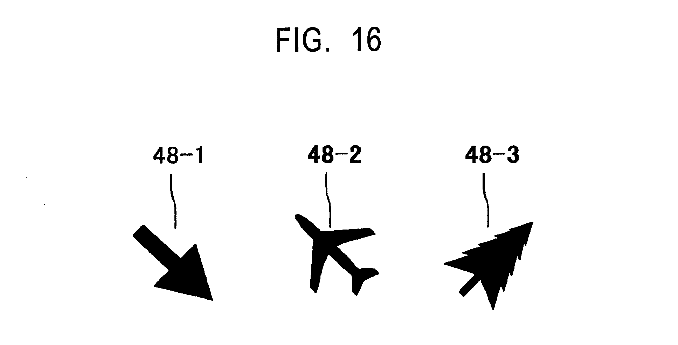

The image patterns 48 for encoding may include various types. Fig. 16 shows other examples of image patterns 48-1, 48-2, and 48-3.

The information input medium 43 is not limited to a book-like medium and includes any goods including the recognition target image 47.

### Industrial Applicability

As described above, according to the present invention, an image serving as desired content can be obtained simply by capturing an image of an information-including region in an information input medium. Accordingly, the burden on a user of obtaining content is alleviated. According to the present invention, since the encodable code length is freely selected, an increase in the number of pieces of content that can be provided is handled appropriately and flexibly.

## Claims

1. A terminal comprising:
a display unit that can display an image;
image capturing means for capturing an image of an information-including region in an information input medium including information for specifying an image that can be provided as content, the information being encoded by the direction of rotation of a predetermined image pattern;
recognition means for determining, on the basis of image information captured by the image capturing means, the direction of rotation of the image pattern and recognizing the information for specifying the image, which can be provided as the content; and
content obtaining means for obtaining the image serving as the corresponding content on the basis of the information recognized by the recognition means.

2. A terminal according to claim 1, further comprising:
detection means for detecting the movement of the terminal; and
scrolling means for moving, when displaying an image larger than a display screen of the display unit on the display screen, the position of the image displayed on the display screen in accordance with the movement of the terminal, the movement being detected by the detection means.

3. A terminal according to claim 2, further comprising:
table obtaining means for obtaining a table for assigning individual functions to a plurality of partial regions constituting the image obtained as the content by the content obtaining means; and
execution means for executing, on the basis of the table obtained by the table obtaining means, a function assigned to a region displayed on the display screen by moving the image by the scrolling means.

4. A content obtaining method for a terminal having a display unit that can display an image and an image capturing unit for capturing an image, the method comprising:
a step of capturing an image of an information-including region in an information input medium including information for specifying an image that can be provided as content, the information being encoded by the direction of rotation of a predetermined image pattern;
a step of determining, on the basis of captured image information, the direction of rotation of the image pattern and recognizing the information for specifying the image, which can be provided as the content; and
a step of obtaining the image serving as the corresponding content on the basis of the recognized information.

5. A content obtaining method for a terminal having a display unit that can display an image, a scrolling function of moving, when displaying an image larger than a display screen of the display unit on the display screen, the position of the image displayed on the display screen, and an image capturing unit for capturing an image, the method comprising:
a step of capturing an image of an information-including region in an information input medium including information for specifying an image that can be provided as content, the information being encoded by the direction of rotation of a predetermined image pattern;
a step of determining, on the basis of captured image information, the direction of rotation of the image pattern and recognizing the information for specifying the image, which can be provided as the content;
a step of obtaining the image serving as the corresponding content on the basis of the recognized information;
a step of displaying the image obtained as the content on the display screen;
a step of obtaining a table for assigning individual functions to a plurality of partial regions constituting the image obtained as the content; and
a step of executing, on the basis of the obtained table, a function assigned to a region displayed on the display screen by moving the image by the scrolling function.

6. A content providing method for providing content to a terminal having a display unit that can display an image and an image capturing unit for capturing an image, the method comprising:
providing an information input medium including information for specifying an image that can be provided as content, the information being encoded by the direction of rotation of a predetermined image pattern; and
causing the image capturing unit of the terminal to capture an image of an information-including region in the information input medium; causing the terminal to recognize the information on the image, which can be provided as the content, on the basis of captured image information; and providing the image serving as the corresponding content to the terminal in response to a request based on the recognition result from the terminal.

7. A content providing method for providing content to a terminal according to claim 6, wherein the terminal is charged a fee for the content provided.

8. A content providing method for providing content to a terminal having a display unit that can display an image, a scrolling function of moving, when displaying an image larger than a display screen of the display unit on the display screen, the position of the image displayed on the display screen, and an image capturing unit for capturing an image, the method comprising:
providing an information input medium including information for specifying an image that can be provided as content, the information being encoded by the direction of rotation of a predetermined image pattern; and
causing the image capturing unit of the terminal to capture an image of an information-including region in the information input medium; causing the terminal to recognize the information on the image, which can be provided as the content, on the basis of captured image information; providing the image serving as the corresponding content to the terminal in response to a request based on the recognition result from the terminal; and providing a table for assigning individual functions to a plurality of partial regions constituting the image and for executing a function assigned to an arbitrary region displayed on the display screen by the scrolling function.

9. A content providing method for providing content to a terminal according to claim 8, wherein the terminal is charged a fee for the content provided.

10. An information input medium including information for specifying an image that can be provided as content to a terminal having a display unit that can display an image and an image capturing unit for capturing an image, the information being encoded by the direction of rotation of a predetermined image pattern.
